# EUROPEAN PATENT SPECIFICATION

(11) **EP 3 203 166 B1**
(45) Date of publication and mention of the grant of the patent: **02.09.2020**
(21) Application number: 16199986.7
(22) Date of filing: 22.11.2016
(51) Int. Cl.: F25B 49/02

(54) **AIR CONDITIONER AND METHOD OF CONTROLLING THE SAME**
KLIMAANLAGE UND VERFAHREN ZUR STEUERUNG DAVON
CLIMATISATION ET PROCÉDÉ DE COMMANDE CORRESPONDANT

(30) Priority: 04.02.2016 KR 20160014108
(43) Date of publication of application: 09.08.2017
(73) Proprietor: LG Electronics Inc., Seoul 07336 (KR)
(72) Inventor: HWANG, Gilun, 08592 Seoul (KR); LEE, Sangho, 08592 Seoul (KR); KIM, Jusang, 08592 Seoul (KR)
(74) Representative: Ter Meer Steinmeister & Partner

(56) References cited:
- US-A1- 2002 026 801
- US-A1- 2014 180 483
- US-A1- 2015 292 777

## Description

### TECHNICAL FIELD

An air conditioner and a method of controlling the same.

### BACKGROUND

Generally, an air conditioner refers to a device that adjusts an indoor temperature in order to make indoor air environment comfortable.

The air conditioner includes an indoor unit disposed in an indoor space and an outdoor unit that supplies refrigerant to the indoor unit. The outdoor unit may be connected to one or more indoor units.

The air conditioner may be controlled to operate in an air cooling operation mode or an air heating operation mode by supplying the refrigerant to the indoor unit. The air cooling operation or the air heating operation is determined depending on a flow of circulating refrigerant. That is, the air conditioner operate in the air cooling operation mode or the air heating operation mode depending on the flow of refrigerant.

Regarding conventional air conditioners, a compressor drives at a previously-set operating frequency without a load of the indoor space so that the temperature of the indoor space adjusts to a set temperature. The load of the indoor space may thus be determined based on the size of the indoor space or the thermal insulation of a building. For example, when the size of the indoor space is large or the thermal insulation of the building is low, the load of the indoor is high, and when the size of the indoor space is small or the thermal insulation of the building is high, the load of the indoor space is low.

When conventional air conditioners operate in a state where the load of the indoor space is high, the air cooling performance or air heating performance is reduced, which is problematic. That is, air cooling or air heating is not rapidly made, and the user may recognize that the performance of the air conditioner is weak, thus lowering reliability of the air conditioner.

Alternatively, when conventional conditioners operate in a state where a load of the indoor space is low, the temperature of the indoor space rapidly reaches a set temperature, which is problematic because the thermo is turned on/off frequently. That is, when the temperature of the indoor space reaches the set temperature, the compressor may be turned off or be driven at a low operating frequency. When the temperature of the indoor space becomes far from the set temperature, the compressor is again driven at a high frequency. The above operations are repeatedly performed, which is problematic because it results in increased power consumption.

An example of a conventional air conditioner is described in Korean Patent Application No. 10-2011-0009927. The application discloses a technology which provides an operation unit for enabling input of capability distribution of indoor units with respect to a plurality of indoor units, and allows the user to change the capability of each of the indoor units, thus preventing weak air cooling or strong air cooling in a specific indoor space and achieving rapid air cooling or slow air cooling according to desires of the user. However, there is a need for an air conditioner that detects an indoor load by the air conditioner itself and performs appropriate control based on information about the detected load, without determination of user with respect to the indoor load.

US 2014/180483 A1 describes an intelligent thermostatic method for an air conditioner blowing cold and hot air that has the steps of calculating an estimated thermal load according to an indoor temperature, an outdoor temperature, a configured temperature, a sunlight intensity, and a cooling/heating capacity corresponding to the estimated thermal load; adjusting the air conditioner according to the estimated thermal load and providing an estimated cooling/heating capacity; and determining a difference value between an actual cooling/heating capacity and the estimated cooling/heating capacity and adjusting the air conditioner according to the difference value for thermostatic control.

US 2015/292777 A1 describes an air-conditioning apparatus. A target condensing temperature and a target evaporating temperature are changed in accordance with a load of each load side unit obtained by using load detection means, and an operating frequency of a compressor and a rotation speed of a fan are controlled such that a condensing temperature obtained by using temperature detection means coincides with the target condensing temperature and an evaporating temperature obtained by using the temperature detection means coincides with the target evaporating temperature.

### SUMMARY

The objects of the present invention are solved by the features of the independent claims. In order to solve at least the above-described problem, the disclosed embodiments provide an air conditioner that detects a load of an indoor space and actively perform control and a method of controlling the same.

According to one aspect of the present invention, a method of controlling an air conditioner is provided according to claim 1.

According to the invention, the load level includes a high load in which the current load is equal to or greater than the reference load; and a low load in which the current load is less than the reference load.

The reference load is a load corresponding to a case where an increase rate of the operating frequency of the compressor is a first set increase rate or a case where an increase rate of the power consumption or current consumption is a second set increase rate.

When it is determined that the increase rate of the operating frequency of the compressor is greater than the first set increase rate or when the increase rate of the power consumption or current consumption is greater than the second set increase rate, the current load is determined as a high load.

When the current load is determined as the high load, the operating frequency of the compressor may be set to a first operating frequency, based on information mapped to the operating frequency of the compressor.

The first operating frequency may include the maximum operating frequency of the compressor.

The method may further include determining an opening degree of a main expansion device based on the determined load level, wherein, when the current load is determined as the high load, the opening degree of the main expansion device may be set to a full opening degree.

The method may further include determining the number of rotations of an outdoor fan based on the determined load level, wherein, when the current load is determined as the high load, the number of rotations of the main expansion device may be set to the maximum number of rotations.

The method may further include performing a temperature maintenance operation mode for maintaining the temperature of the indoor space when the temperature of the indoor space reaches a set temperature.

When the temperature maintenance operation mode is performed, the compressor may be driven at an operating frequency lower than the determined operating frequency of the compressor.

The operating frequency of the compressor may be controlled in different manners depending on whether the current load is the high load, the low load, or the intermediate load.

According to another aspect of the present invention, an air conditioner is provided according to claim 9.

The load detecting unit, according to the present invention, includes a frequency detecting unit configured to detect a rate of change in the operating frequency of the compressor; and a power detecting unit configured to detect current consumption and power consumption occurring upon an operation of the air conditioner.

The operating frequency of the compressor may be set to a first operating frequency when the load detected by the load detecting unit is equal to or greater than a reference load, and the operating frequency of the compressor may be set to a second operating frequency lower than the first operating frequency when the load detected by the load detecting unit is less than the reference load.

According to another embodiment, a method of controlling an air conditioner includes: activating a refrigeration cycle by driving a compressor; detecting a high pressure and a low pressure when the refrigeration cycle is activated; adjusting an operating frequency of the compressor based on the detected high pressure or low pressure of the refrigeration cycle; determining a current load of an indoor space through a load detecting unit; determining a load level of the indoor space by comparing the current load with a reference load; and determining the operating frequency of the compressor based on the determined load level, wherein the reference load is a load corresponding a case where an increase rate of the operating frequency of the compressor is a first set increase rate, and when the increase rate of the operating frequency of the compressor is greater than the first set increase rate, the current load is determined as a high load, and when the increase rate of the operating frequency of the compressor is less than the first set increase rate or the operating frequency of the compressor remains the same or decreases, the current load is determined as a low load.

The method may further include setting the operating frequency of the compressor to the maximum operating frequency when the current load is determined as the high load.

The method may further include setting an opening degree of the main expansion device to a full opening degree when the current load is determined as the high load.

The method may further include setting the number of rotations of the outdoor fan to the maximum number of rotations when the current load is determined as the high load.

According to the embodiments, the operating frequency of the compressor is determined through the load detecting unit, the indoor load is determined by using the power consumption or current consumption value of the air conditioner, and a plurality of control modes with different operating frequencies of the compressor are determined based on the indoor load, thus achieving a rapid air cooling or heating operation.

Also, since the temperature of the indoor space is maintained close to the set temperature, the frequent thermo on/off is prevented and the stable operation is continuously performed, thus reducing power consumption.

Also, when the temperature of the indoor space reaches the set temperature, the compressor may be driven at a predetermined frequency such that the temperature of the indoor space is maintained, thus reducing a change in the temperature of the indoor space and therefore, reducing the uncomfortable feeling of the user and improving product reliability.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:
FIG. 1 is a circuit diagram showing a refrigeration cycle of an air conditioner according to a first embodiment.
FIG. 2 is a block diagram of a configuration of an air conditioner according to the first embodiment.
FIG. 3 is a flowchart of a method of controlling an air conditioner according to the first embodiment.
FIG. 4 is a flowchart of a method of controlling an air conditioner according to a second embodiment.

### DETAILED DESCRIPTION OF THE EMBODIMENTS

Embodiments of the present disclosure are described in detail with reference to the accompanying drawings. It should be noted that similar components are designated by similar reference numerals throughout the specification although they are illustrated in different drawings. For the purposes of clarity and simplicity, a detailed description of known functions and configurations incorporated herein may be omitted as it may obscure the subject matter of the present disclosure.

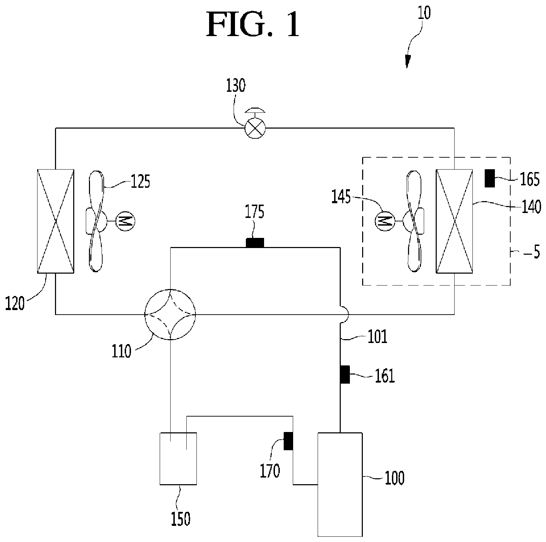

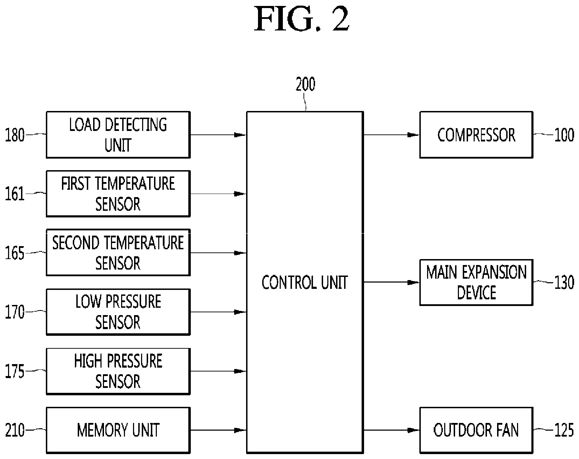

FIG. 1 is a circuit diagram showing a refrigeration cycle of an air conditioner according to a first embodiment, and FIG. 2 is a block diagram of a configuration of an air conditioner according to the first embodiment.

Referring to FIG. 1, the air conditioner 10 includes a compressor 100 configured to compress refrigerant. The compressor 100 includes an inverter compressor capable of adjusting an operating frequency.

The air conditioner 10 includes a discharge pipe 101 provided in an outlet of the compressor 100 to guide a liquid of the refrigerant compressed by the compressor 100. The discharge pipe 101 may include a first temperature sensor 161 configured to detect a temperature of the refrigerant compressed by the compressor 100. The first temperature sensor 161 may be referred to as a "discharge temperature sensor." For example, a temperature value detected by the first temperature sensor 161 may be used to control an opening degree of a main expansion device 130.

The air conditioner 10 may further include a high pressure sensor 175 disposed in the discharge pipe 101 to detect a pressure of the refrigerant compressed by the compressor 100, that is, a high pressure of the refrigeration cycle. The pressure value detected by the high pressure sensor 175 may be used to perform control according to a target high pressure in an air heating operation.

The air conditioner 10 may further include a liquid changing valve 110 disposed in the discharge pipe 101 to change a liquid direction of the compressed refrigerant. For example, the liquid changing valve 110 may include a four-way valve.

The air conditioner 10 may include an outside heat exchanger 120 (outdoor and outside may be used synonymously herein) disposed in an outside unit and an inside heat exchanger 140 (indoor and inside may be used synonymously herein) disposed in an inside unit. The outside unit may be located outside and the inside unit may be located in an inside space.

When the air conditioner 10 operates in an air cooling operation mode, the refrigerant compressed by the compressor 100 is introduced into the outside heat exchanger 120 through the liquid changing valve 110. The refrigerant condensed by the outside heat exchanger 120 is decompressed by an inside expansion device (not illustrated) provided in the inside unit and is introduced into the inside heat exchanger 140. The refrigerant evaporated by the inside heat exchanger 140 is introduced into a gas liquid separator 150 through the liquid changing valve 110. Gas refrigerant separated by the gas liquid separator 150 is again sucked into the compressor 100.

On the other hand, when the air conditioner 10 operates in an air heating operation mode, the refrigerant compressed by the compressor 100 flows into the inside heat exchanger 140 through the liquid changing valve 110. The refrigerant condensed by the inside heat exchanger 140 is decompressed by the main expansion device 130 and is introduced into the outside heat exchanger 120. The refrigerant evaporated by the outside heat exchanger 120 is introduced into the gas liquid separator 150 through the liquid changing valve 110. Gas refrigerant separated by the gas liquid separator 150 is again sucked into the compressor 100.

The main expansion device 130 may be disposed in a pipe connecting the outside heat exchanger 120 and the inside heat exchanger 140. For example, the main expansion device 130 may include an electronic expansion valve capable of adjusting an opening degree.

The gas liquid separator 150 may be disposed on the side of a suction inlet of the compressor 100 to separate gas refrigerant from the evaporated refrigerant and provide the gas refrigerant to the compressor 100.

The air conditioner 10 may further include an outside fan 125 disposed on one side of the outside heat exchanger 120 to provide air flow so as to allow external air to flow toward the outside heat exchanger 120.

The air conditioner 10 may further include an inside fan 145 disposed on one side of the inside heat exchanger 140 to allow air in the inside space 5 to flow toward the inside heat exchanger 140.

The air conditioner 10 may further include a second temperature sensor 165 that detects a temperature of the inside space 5. For example, a temperature value detected by the second temperature sensor 165 may be used to determine whether the temperature of the inside space 5 reaches a set temperature during the air cooling operation or the air heating operation of the air conditioner 10 to determine whether an inside load is resolved.

The air conditioner 10 may further include a low pressure sensor 170 that detects a low pressure of the refrigeration cycle. The low pressure sensor 170 may be disposed in a path through which the evaporated refrigerant is sucked into the compressor 100. For example, the low pressure sensor 170 may be disposed in a "low pressure pipe" extending from the gas liquid separator 150 to the compressor 100 to guide the gas refrigerant separated by the gas liquid separator 150 to the compressor 100.

The air conditioner 10 further includes a load detecting unit 180 that detects a load of the inside space 5. The load of the inside space 5 may be determined based on information about the size of the inside space 5 or the thermal insulation of a building.

The load detecting unit 180 includes a frequency detecting unit for detecting an operating frequency of the compressor 100. In order to allow a required cycle pressure, that is, a high pressure or a low pressure to be formed in a stable pressure range, during the air cooling operation or air heating operation of the air conditioner 10, the operating frequency of the compressor 100 may be increased or decreased. The frequency detecting unit may detect the rate of change in the operating frequency of the compressor 100. The operating frequency of the compressor 100 may be controlled to be increased to more quickly achieve the required cycle pressure.

For example, when the temperature of the inside space 5 is not decreased during the air cooling operation of the air conditioner 10 at a sufficiently rapid rate, the low pressure of the refrigeration cycle may increase. Therefore, a control may be performed to increase the increase rate of the operating frequency of the compressor 100 in order to decrease the low pressure of the refrigeration cycle. When the control is performed, an inside load is determined as being large.

On the other hand, when the temperature of the inside space is rapidly decreased during the air cooling operation of the air conditioner 10, the low pressure of the refrigeration cycle typically decreases and therefore, controls may be performed to decrease the operating frequency of the compressor 100 or decrease the increase rate thereof to maintain the low pressure or decrease the low pressure of the refrigeration cycle. When the control is performed, the inside load is determined as being small.

The load detecting unit includes a power detecting unit that detects current consumption or power consumption in the air conditioner 10.

During the air cooling operation or air heating operation of the air conditioner 10, an inside load may be detected by using the current or power value detected through the current detecting unit or the power detecting unit. When an increase rate of the current or power value is large, it may be recognized that the inside load is large. On the other hand, when the increase rate of the current or power value is small, it may be recognized that the inside load is small.

The air conditioner 10 further includes a control unit 200 configured to control an operation of the compressor 100, the main expansion device 130, and/or the outside fan 125 based on information detected by the load detecting unit 180, the first temperature sensor 161, the second temperature sensor 165, the low pressure sensor 170, and/or the high pressure sensor 175.

The control unit 200 may be electrically connected to the load detecting unit 180, the temperature sensors 161 and 165, the low pressure sensor 170, the high pressure sensor 175, the load detecting unit 180, the compressor 100, the main expansion device 130, and/or the outside fan 125.

The air conditioner 10 may further include a memory unit 210 configured to store information about the operating frequency of the compressor 100 with respect to the operation modes of the air conditioner 10 in a mapping scheme. The memory unit 210 may store information about the opening degree of the main expansion device or information about the number of rotations of the outside fan 125, with respect to the operation modes of the air conditioner 10 in a mapping scheme.

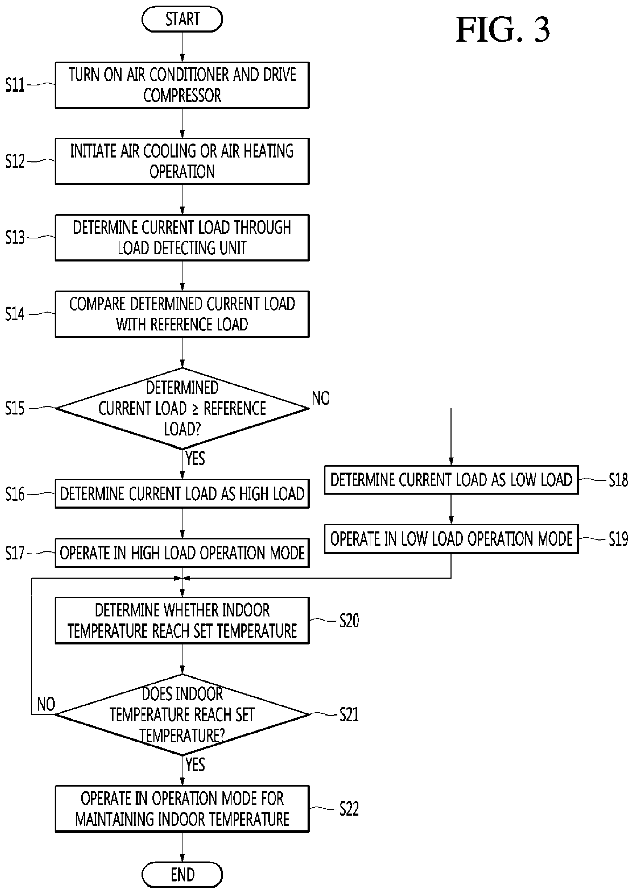

FIG. 3 is a flowchart of a method of controlling an air conditioner, according to the first embodiment.

When the air conditioner 10 is turned on, the compressor 100 is driven, and an air cooling operation or an air heating operation is initiated.

For example, when the air conditioner 10 operates in the air heating operation mode, the compressor 100 may be controlled under what may be referred to as a "target high pressure control". In the air heating operation, since the high pressure of the refrigeration cycle has a major impact on heating performance, the operating frequency of the compressor 100 may be determined such that the high pressure is formed in a set pressure range.

When the operating frequency of the compressor 100 increases, the high pressure may increase, and when the operating frequency of the compressor 100 decreases, the high pressure may decrease. When the compressor is driven at a predetermined operating frequency in the initial driving of the compressor 100, an increase rate of the high pressure is less than a predetermined increase rate, and the operating frequency of the compressor 100 may increase.

When the increase rate of the high pressure is less than a predetermined increase rate in a case where the operating frequency of the compressor 100 increases, the increase rate of the operating frequency of the compressor 100 may increase over time. In this case, an increase rate of the power consumption or current consumption of the air conditioner 10 may be relatively high.

On the contrary, when the compressor is driven at a predetermined operating frequency in the initial driving of the compressor 100, an increase rate of the high pressure is greater than a predetermined increase rate, and the operating frequency of the compressor 100 may be maintained or decrease. In this case, the increase rate of the power consumption or current consumption of the air conditioner 10 may be relatively low.

On the other hand, when the air conditioner 10 operates in the air cooling operation mode, the compressor 100 may be controlled under what may be referred to as a "target low pressure control". In the air cooling operation, since the low pressure of the refrigeration cycle impacts cooling performance, the operating frequency of the compressor 100 may be determined such that the low pressure is formed in a set pressure range.

When the operating frequency of the compressor 100 increases, the low pressure may decrease, and when the operating frequency of the compressor 100 decreases, the low pressure may increase. When the compressor is driven at a predetermined operating frequency in the initial driving of the compressor 100, a decrease rate of the low pressure is less than a predetermined decrease rate, and the operating frequency of the compressor 100 may increase.

When the decrease rate of the low pressure is less than the predetermined decrease rate in a case where the operating frequency of the compressor 100 increases, the increase rate of the operating frequency of the compressor 100 may increase over time. In this case, the increase rate of the power consumption or current consumption of the air conditioner 10 may be relatively high.

On the contrary, when the compressor is driven at a predetermined operating frequency in the initial driving of the compressor 100, the decrease rate of the low pressure is greater than the predetermined decrease rate, and the operating frequency of the compressor 100 may remain the same or decrease. In this case, the increase rate of the power consumption or current consumption of the air conditioner 10 may be relatively low (S11 and S12).

The current load of the inside space is determined through the load detecting unit 180. The current load of the inside space is determined based on a rate of change in the operating frequency of the compressor 100 or an increase rate of the power consumption or current consumption of the air conditioner 10. The determined current load is compared with a reference load to determine a level of the current load.

The reference load corresponds to a case where the increase rate of the operating frequency of the compressor 100 is a first set increase rate or a case where the increase rate of the power consumption or current consumption is a second set increase rate (S13 and S14).

When the determined current load is greater than or equal to the reference load, that is, when the increase rate of the operating frequency of the compressor 100 is greater than the first set increase rate, or when the increase rate of the power consumption or current consumption is greater than the second set increase rate, the determined current load is referred to as a "high load".

On the contrary, when the determined current load is less than the reference load, that is, when the increase rate of the operating frequency of the compressor 100 is less than the first set increase rate or the operating frequency of the compressor 100 is maintained or decreases, or when the increase rate of the power consumption or current consumption is less than the second set increase rate, the determined current load is referred to as a "low load".

The air conditioner 10 may be controlled in different manners or control modes depending on whether the current load is determined as the "high load" or the "low load".

For example, as shown in Table 1 below, when the current load is determined as the "high load", the air conditioner 10 may be controlled to operate in a "high load operation mode".

**Table 1**

| Mode | Compressor | Main expansion device | Outside fan |
|---|---|---|---|
| High load operation mode | First operating frequency | First set opening degree | First set number of rotations |

In the "high load operation mode", the operating frequency of the compressor 100 may be set to the first operating frequency. The first operating frequency may be set to an operating frequency that is close to the maximum operating frequency of the compressor 100. For example, the first operating frequency may be determined to be in a range from an operating frequency, which is 70% of the maximum operating frequency, to the maximum operating frequency.

In the "high load operation mode", the opening degree of the main expansion device 130 may be set to a first set opening degree. The first set opening degree may be a relatively large opening degree as compared to when the air conditioner 10 is controlled to operate in the low load operation mode. For example, the first set opening degree may be set to a full opening degree. Since the first set opening degree is set to the relatively large opening degree, the amount of the refrigerant circulating through the refrigeration cycle increases, thus improving air conditioning performance.

When In the high load operation mode, the number of rotations of the outside fan 125 may be set to a first set number of rotations. The first set number of rotations may be a relatively large number of rotations as compared to when the air conditioner 10 is controlled to operate in the low load operation mode. For, the first set number of rotations may be set to the maximum number of rotations. Since the first set number of rotations is set to the relatively large number of rotations, the amount of heat exchanged in the outside heat exchanger increases, thus improving condensing performance or evaporation performance (S15, S16, and S17).

On the other hand, for example, as shown in Table 2 below, when the current load is determined as the "low load", the air conditioner 10 may be controlled to operate in a "low load operation mode".

**Table 2**

| Mode | Compressor | Main expansion device | Outside fan |
|---|---|---|---|
| Low load operation mode | Second operating frequency | Second set opening degree | Second set number of rotations |

In the "low load operation mode", the operating frequency of the compressor 100 may be set to the second operating frequency. The second operating frequency is understood as being a frequency value less than the first operating frequency. For example, the second operating frequency may be set to a value less than an operating frequency which is 70% of the maximum operating frequency.

In the low load operation mode, the opening degree of the main expansion device 130 may be set to the second set opening degree. The second set opening degree may be an opening degree less than the first set opening degree. For example, the second set opening degree may be set to an opening degree that is in a range of 50 to 80% of the full opening degree. Since the second set opening degree is set to the relatively small opening degree as compared to when the air conditioner 10 is controlled to operate in the high load operation mode, the amount of the refrigerant circulating through the refrigeration cycle slightly decreases, thus achieving the operation optimized to the low load.

When the air conditioner 10 may be controlled to operate in the low load operation mode, the number of rotations of the outside fan 125 may be set to the second set number of rotations. The second set number of rotations may be less than the first set number of rotations. For, the second set number of rotations may be set to the number of rotations that is in a range of 50 to 70% of the maximum number of rotations. Since the second set number of rotations is set to the relatively small number of rotations, the outside heat exchanger may achieve heat exchange performance optimized to the low load (S18 and S19).

When the air conditioner 10 operates in the high load operation mode or the low load operation mode, it may be determined whether the temperature of the inside space reaches a set temperature. The temperature of the inside space may be detected by the second temperature sensor 165 (S20) .

When the temperature of the inside space reaches the set temperature, it is determined that the inside load is resolved, and an operation mode for maintaining the temperature of the inside space may be performed. This operation mode may be referred to herein as a "temperature maintenance operation mode".

When the air conditioner 10 operates in the temperature maintenance operation mode, control may be performed to decrease a frequency of the compressor in a case where the air conditioner 10 operates in the high load operation mode or the low load operation mode. For example, in a case where the air conditioner 10 operates in the high load operation mode, when the temperature of the inside space reaches the set temperature, the operating frequency of the compressor 100 may be set to a frequency that is 1/2 of the first operating frequency. On the other hand, in a case where the air conditioner 10 operates in the low load operation mode, when the temperature of the inside space reaches the set temperature, the operating frequency of the compressor 100 may be set to a frequency that is 1/2 of the second operating frequency. Furthermore, the opening degree of the main expansion device 130 and the number of rotations of the outside fan 125 may be maintained (S21 and S22).

According to the above-described control method, it is possible to improve air cooling and air heating performance and prevent frequent thermo on/off by determining a load of the inside space through the load detecting unit and performing the high load operation mode and the low load operation mode based on the determined load of the inside space. When the temperature of the inside space reaches the set temperature, it is possible to perform an operation of maintaining the temperature of the inside space by decreasing the frequency of the compressor 100, thus allowing a user to continuously feel comfortable.

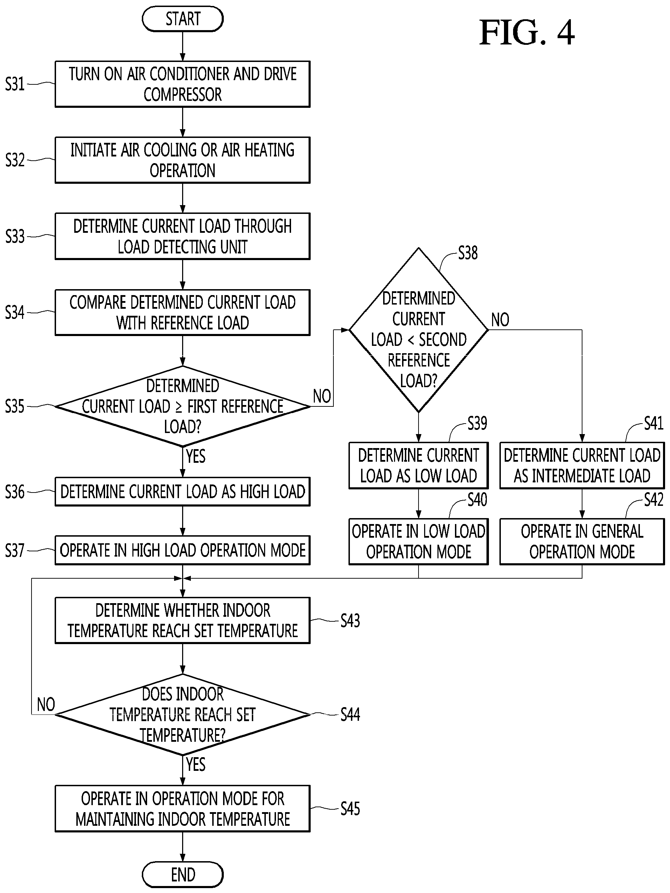

FIG. 4 is a flowchart of a method of controlling an air conditioner, according to a second embodiment.. Since the second embodiment is different from the first embodiment in a partial configuration, a description will be given focusing on the difference and the same elements as the first embodiment quote the description and reference numerals of the first embodiment.

According to the second embodiment, when the air conditioner 10 is turned on, the compressor 100 is driven and an air cooling operation or an air heating operation is initiated. When the air conditioner 10 operates in an air heating operation mode, the compressor 100 is controlled under what is referred to as a "target high pressure control". When the air conditioner 10 operates in an air cooling operation mode, the compressor 100 is controlled under what is referred to as a "target low pressure control".

The current load of the inside space is determined through the load detecting unit 180. That is, the current load of the inside space may be determined based on a rate of change in the operating frequency of the compressor 100 or an increase rate of the power consumption or current consumption of the air conditioner 10. The determined current load may be compared with first and second reference loads.

The first reference load may correspond to a case where the increase rate of the operating frequency of the compressor 100 is a first set increase rate or a case where the increase rate of the power consumption or current consumption is a second set increase rate. In addition, the second reference load may correspond to a case where the increase rate of the operating frequency of the compressor 100 is a third set increase rate or a case where the increase rate of the power consumption or current consumption is a fourth set increase rate.

The third set increase rate may be lower than the first set increase rate, and the fourth set increase rate may be lower than the third set increase rate (S33 and S34).

When the determined current load is equal to or greater than the first reference load, that is, when the increase rate of the operating frequency of the compressor 100 is greater than the first set increase rate or when the increase rate of the power consumption or current consumption is greater than the second set increase rate, the determined current load may be referred to as a "high load".

On the contrary, when the determined current load is less than the second reference load, that is, when the increase rate of the operating frequency of the compressor 100 is less than the third set increase rate or the operating frequency of the compressor 100 remains the same or decreases or when the increase rate of the power consumption or current consumption is less than the fourth set increase rate, the determined current load may be referred to as a "low load".

In addition, when the determined current load is equal to or greater than the second reference load and is less than the first reference load, that is, when the increase rate of the operating frequency of the compressor 100 is equal to or greater than the third set increase rate and is less than the first set increase rate or when the increase rate of the power consumption or current consumption is equal to or greater than the fourth set increase rate and is less than the second set increase rate, the determined current load may be referred to as an "intermediate load".

The air conditioner 10 may be controlled in different manners or control modes depending on whether the current load is determined as the "high load", the "low load", or the "intermediate load".

Specifically, when the current load is determined as the "high load", the air conditioner 10 may be controlled to operate in a "high load operation mode", such as described above in Table 1. When the first operating frequency of the compressor 100 is set to be equal to or higher than a value that is 70% of the maximum operating frequency, the opening degree of the main expansion device 130 is set to a full opening degree, and the number of rotations of the outside fan 125 may be set to the maximum number of rotations.

When the current load is determined as the "low load", the air conditioner 10 may be controlled to operate in the "low load operation mode", such as described above in Table 2. When the second operating frequency of the compressor 100 is set to be equal to or less than a value that is 40% of the maximum operating frequency, the opening degree of the main expansion device 130 is set to be equal to or less than an opening degree that is 60% of the full opening degree, and the number of rotations of the outside fan 125 may be set to be equal to or less than a value that is 60% of the maximum number of rotations.

When the current load is determined as the "intermediate load", the air conditioner 10 may be controlled to operate in a "general operation mode". In this mode, the compressor 100 may be controlled to be driven at a third operating frequency, and the third operating frequency may be determined in a range of 40 to 70% of the maximum operating frequency. The opening degree of the main expansion device 130 may be determined in a range of 60 to 100% of the full opening degree and the number of rotations of the outside fan 125 may be determined in a range of 60 to 100% of the maximum number of rotations (S35 to S41).

When the air conditioner 10 operates in the high load operation mode, the low load operation mode, or the general operation mode, it is determined whether the temperature of the inside space reaches a set temperature. The temperature of the inside space may be detected by the second temperature sensor 165 (S42).

When the temperature of the inside space reaches the set temperature, it is determined that the inside load is resolved, and an operation mode for maintaining the temperature of the inside space may be performed. This operation mode may be referred to as a "temperature maintenance operation mode".

When the air conditioner 10 operates in the temperature maintenance operation mode, control may be performed to decrease a frequency of the compressor in a case where the air conditioner 10 operates in the high load operation mode, the low load operation mode, or the general operation mode. For example, control may be performed to decrease the operating frequency of the compressor 100, which has been determined in each operation mode, by 1/2. Furthermore, the opening degree of the main expansion device 130 and the number of rotations of the outside fan 125 may be maintained (S43 and S44).

According to the above-described control method, it is possible to improve air cooling or heating performance and prevent frequent thermo on/off by determining a load of the inside space through the load detecting unit and performing the high load operation mode, the low load operation mode, or the general operation mode based on the determined load of the inside space. When the temperature of the inside space reaches the set temperature, an operation of maintaining the temperature of the inside space by decreasing the frequency of the compressor 100 may be performed, thus allowing a user to continuously feel comfortable.

## Claims

1. A method of controlling an air conditioner (10), comprising:
activating (S11, S12; S31, S32), by a controller (200), a refrigeration cycle by driving a compressor (100);
detecting, by a pressure sensor (175, 170), a high pressure and a low pressure of the refrigeration cycle when the refrigeration cycle is activated;
adjusting, by the controller (200), an operating frequency of the compressor (100) based on the detected high pressure or the detected low pressure of the refrigeration cycle;
determining (S13; S33), by a load detecting unit (180), a current load of an inside space (5), a load level of the inside space (5) being determined by comparing (SI4, S15; S34, S35, S38) the current load with a reference load; and
determining (S17, S19; S37, S40, S42), by the load detecting unit (180), the operating frequency of the compressor (100) based on the determined load level,
wherein the load detecting unit (180) comprises:
a frequency detector to detect the operating frequency of the compressor (100), and
a power detector to detect current consumption and power consumption occurring upon the activation of the refrigeration cycle,
wherein the load level comprises:
a high load in which the current load is greater than or equal to the reference load; and
a low load in which the current load is less than the reference load,
wherein the reference load is a load corresponding to when an increase rate of the operating frequency of the compressor (100) is a first set increase rate, or a load corresponding to when an increase rate of the power consumption or current consumption is a second set increase rate, and
wherein, when it is determined that the increase rate of the operating frequency of the compressor (100) is greater than the first set increase rate or when the increase rate of the power consumption or current consumption is greater than the second set increase rate, the current load is determined as the high load.

2. The method of claim 1, wherein the high pressure and the low pressure of the refrigeration cycle are detected when the refrigeration cycle is activated.

3. The method of claim 1, wherein, when the current load is determined as the high load, the operating frequency of the compressor (100) is set to a first operating frequency based on information mapped to the operating frequency of the compressor (100).

4. The method of claim 3, wherein the first operating frequency includes the maximum operating frequency of the compressor (100).

5. The method of any one of claims 1 to 4, further comprising determining, by the controller (200), an opening degree of a main expansion device (130) based on the determined load level,
wherein, when the current load is determined as the high load, the opening degree of the main expansion device (130) is set to a full opening degree.

6. The method of any one of claims 1 to 5, further comprising determining a number of rotations of an outside fan (125) based on the determined load level,
wherein, when the current load is determined as the high load, the number of rotations of the outside fan (125) is set to the maximum number of rotations.

7. The method of according to any one of the claims 1 to 6, further comprising performing a temperature maintenance operation, by the controller (200), for maintaining the temperature of the inside space (5) when the temperature of the inside space (5) reaches a set temperature.

8. The method of claim 7, wherein, when the temperature maintenance operation is performed, the compressor (100) is driven at an operating frequency that is lower than the determined operating frequency of the compressor (100).

9. An air conditioner (10) comprising:
a compressor (100) with an adjustable operating frequency;
an outside heat exchanger (120) that condenses refrigerant compressed by the compressor (100) in an air cooling operation;
a main expansion device (130) that decompresses the refrigerant condensed by the outside heat exchanger (120);
a pressure sensor (175, 170) for detecting a high pressure and a low pressure of the refrigeration cycle;
an inside heat exchanger (140) that evaporates the refrigerant decompressed by the main expansion device (130) and discharges air into an inside space (5);
a load detecting unit (180) that detects a load of the inside space (5), the load detecting unit (180) comprising a frequency detecting unit that detects a rate of change in the operating frequency of the compressor (100) and a power detecting unit that detects current consumption and power consumption occurring upon an operation of the air conditioner (10);
a memory unit (210) that stores information about the operating frequency of the compressor (100), the stored information being mapped with the load detected by the load detecting unit (180); and
a controller (200) configured to adjust an operating frequency of the compressor (100) based on the detected high pressure or the detected low pressure of the refrigeration cycle,
wherein the load detecting unit (180) is configured to determine a current load of the inside space (5), a load level of the inside space (5) being determined by comparing (S14, S15; S34, S35, S38) the current load with a reference load,
wherein the load detecting unit (180) is configured to determine the operating frequency of the compressor (100) based on the determined load level,
wherein the load level comprises:
a high load in which the current load is greater than or equal to the reference load; and
a low load in which the current load is less than the reference load,
wherein the reference load is a load corresponding to when an increase rate of the operating frequency of the compressor (100) is a first set increase rate, or a load corresponding to when an increase rate of the power consumption or current consumption is a second set increase rate, and
wherein, when it is determined that the increase rate of the operating frequency of the compressor (100) is greater than the first set increase rate or when the increase rate of the power consumption or current consumption is greater than the second set increase rate, the current load is determined as the high load.

## Patentansprüche

1. Verfahren zum Steuern einer Klimaanlage (10), wobei das Verfahren die folgenden Schritte umfasst:
Aktivieren (S11, S12; S31, S32) eines Kühlkreislaufs durch Antreiben eines Kompressors (100) mittels einer Steuerung (200);
Detektieren durch einen Drucksensor (175, 170) eines hohen Drucks und eines niedrigen Drucks des Kühlkreislaufs, wenn der Kühlkreislauf aktiviert worden ist;
Anpassen einer Betriebsfrequenz des Kompressors (100) durch die Steuerung (200) auf der Basis des detektierten hohen Drucks oder des detektierten niedrigen Drucks des Kühlkreislaufs;
Feststellen (S13; S33) einer aktuellen Auslastung eines Innenraums (5) durch eine Auslastungsdetektionseinheit (180), wobei eine Auslastungsstufe des Innenraums (5) durch Vergleichen (S14, S15; S34, S35, S38) der aktuellen Auslastung mit einer Referenzauslastung festgestellt wird; und
Feststellen (S17, S19; S37, S40, S42) der Betriebsfrequenz des Kompressors (100) durch die Auslastungsdetektionseinheit (180) auf der Basis der festgestellten Auslastungsstufe,
wobei die Auslastungsdetektionseinheit (180) Folgendes umfasst:
einen Frequenzdetektor, um die Betriebsfrequenz des Kompressors (100) zu detektieren, und
einen Energiedetektor, um den Stromverbrauch und den Energieverbrauch zu detektieren, die bei der Aktivierung des Kühlkreislaufs auftreten,
wobei die Auslastungsstufe Folgendes umfasst:
eine hohe Auslastung, bei der die aktuelle Auslastung größer oder gleich der Referenzauslastung ist; und
eine niedrige Auslastung, bei der die aktuelle Auslastung niedriger als die Referenzauslastung ist,
wobei die Referenzauslastung eine Auslastung ist, die einem Zustand entspricht, wenn eine Anstiegsrate der Betriebsfrequenz des Kompressors (100) einer ersten eingestellten Anstiegsrate entspricht, oder eine Auslastung ist, die einem Zustand entspricht, wenn eine Anstiegsrate des Energieverbrauchs oder des Stromverbrauchs einer zweiten eingestellten Anstiegsrate entspricht, und
wobei dann, wenn festgestellt wird, dass die Anstiegsrate der Betriebsfrequenz des Kompressors (100) größer als die erste eingestellte Anstiegsrate ist, oder wenn die Anstiegsrate des Energieverbrauchs oder des Stromverbrauchs größer als die zweite eingestellte Anstiegsrate ist, die aktuelle Auslastung als die hohe Auslastung festgestellt wird.

2. Verfahren nach Anspruch 1, wobei der hohe Druck und der niedrige Druck des Kühlkreislaufs detektiert werden, wenn der Kühlkreislauf aktiviert worden ist.

3. Verfahren nach Anspruch 1, wobei dann, wenn festgestellt wird, dass die aktuelle Auslastung der hohen Auslastung entspricht, die Betriebsfrequenz des Kompressors (100) auf der Basis von Informationen, die der Betriebsfrequenz des Kompressors (100) zugeordnet sind, auf eine erste Betriebsfrequenz eingestellt wird.

4. Verfahren nach Anspruch 3, wobei die erste Betriebsfrequenz die maximale Betriebsfrequenz des Kompressors (100) umfasst.

5. Verfahren nach einem der Ansprüche 1 bis 4, das ferner das Feststellen eines Öffnungsgrads einer Hauptexpansionsvorrichtung (130) durch die Steuerung (200) auf der Basis der ermittelten Auslastungsstufe umfasst,
wobei dann, wenn festgestellt wird, dass die aktuelle Auslastung die hohe Auslastung ist, der Öffnungsgrad der Hauptexpansionsvorrichtung (130) auf einen vollständigen Öffnungsgrad eingestellt wird.

6. Verfahren nach einem der Ansprüche 1 bis 5, das ferner das Feststellen einer Drehzahl eines Außengebläses (125) auf der Basis der festgestellten Auslastungsstufe umfasst,
wobei dann, wenn festgestellt wird, dass die aktuelle Auslastung die hohe Auslastung ist, die Drehzahl des Außengebläses (125) auf die maximale Drehzahl eingestellt wird.

7. Verfahren nach einem der Ansprüche 1 bis 6, das ferner das Durchführen eines Betriebs zum Aufrechterhalten einer Temperatur durch die Steuerung (200) umfasst, um die Temperatur des Innenraums (5) aufrechtzuerhalten, wenn die Temperatur des Innenraums (5) eine eingestellte Temperatur erreicht hat.

8. Verfahren nach Anspruch 7, wobei dann, wenn der Betrieb zum Aufrechterhalten der Temperatur ausgeführt wird, der Kompressor (100) mit einer Betriebsfrequenz angetrieben wird, die niedriger als die festgelegte Betriebsfrequenz des Kompressors (100) ist.

9. Klimaanlage (10), die Folgendes umfasst:
einen Kompressor (100) mit einer einstellbaren Betriebsfrequenz;
einen äußeren Wärmetauscher (120), der Kühlmittel kondensiert, das durch den Kompressor (100) in einem Betrieb zum Kühlen von Luft komprimiert wird;
eine Hauptexpansionsvorrichtung (130), die das Kühlmittel dekomprimiert, das durch den äußeren Wärmetauscher (120) kondensiert worden ist;
einen Drucksensor (175, 170) zum Detektieren eines hohen Drucks und eines niedrigen Drucks des Kühlkreislaufs;
einen inneren Wärmetauscher (140), der das Kühlmittel verdampft, das durch die Hauptexpansionsvorrichtung (130) dekomprimiert wurde, und Luft in einen Innenraum (5) abführt;
eine Auslastungsdetektionseinheit (180), die eine Auslastung des Innenraums (5) detektiert, wobei die Auslastungsdetektionseinheit (180) eine Frequenzdetektionseinheit, die eine Änderungsrate der Betriebsfrequenz des Kompressors (100) detektiert, und eine Energiedetektionseinheit, die einen Stromverbrauch und einen Energieverbrauch detektiert, die bei einem Betrieb der Klimaanlage (10) auftreten, umfasst;
eine Speichereinheit (210), die Informationen bezüglich der Betriebsfrequenz des Kompressors (100) speichert, wobei die gespeicherten Informationen der Auslastung zugeordnet werden, die durch die Auslastungsdetektionseinheit (180) detektiert wird; und
eine Steuerung (200), die konfiguriert ist, eine Betriebsfrequenz des Kompressors (100) auf der Basis des detektierten hohen Drucks oder des detektierten niedrigen Drucks des Kühlkreislaufs einzustellen,
wobei die Auslastungsdetektionseinheit (180) konfiguriert ist, eine aktuelle Auslastung des Innenraums (5) festzustellen, wobei eine Auslastungsstufe des Innenraums (5) durch Vergleichen (S14, S15; S34, S35, S38) der aktuellen Auslastung mit einer Referenzauslastung festgestellt wird,
wobei die Auslastungsdetektionseinheit (180) konfiguriert ist, die Betriebsfrequenz des Kompressors (100) auf der Basis der festgestellten Auslastungsstufe festzulegen,
wobei die Auslastungsstufe Folgendes umfasst:
eine hohe Auslastung, bei der die aktuelle Auslastung größer oder gleich einer Referenzauslastung ist; und
eine niedrige Auslastung, bei der die aktuelle Auslastung niedriger als die Referenzauslastung ist,
wobei die Referenzauslastung eine Auslastung ist, die einem Zustand entspricht, wenn eine Anstiegsrate der Betriebsfrequenz des Kompressors (100) einer ersten eingestellten Anstiegsrate entspricht, oder eine Auslastung ist, die einem Zustand entspricht, wenn eine Anstiegsrate des Energieverbrauchs oder des Stromverbrauchs einer zweiten eingestellten Anstiegsrate entspricht, und
wobei dann, wenn festgestellt wird, dass die Anstiegsrate der Betriebsfrequenz des Kompressors (100) größer als die erste eingestellte Anstiegsrate ist, oder wenn die Anstiegsrate des Energieverbrauchs oder des Stromverbrauchs größer als die zweite eingestellte Anstiegsrate ist, festgestellt wird, dass die aktuelle Auslastung der hohen Auslastung entspricht.

## Revendications

1. Procédé pour commander un climatiseur (10), comportant les étapes consistant à :
activer (S11, S12 ; S31, S32), par une commande (200), un cycle de réfrigération en entraînant un compresseur (100) ;
détecter, par un capteur de pression (175, 170), une haute pression et une basse pression du cycle de réfrigération lorsque le cycle de réfrigération est activé ;
régler, par la commande (200), une fréquence de fonctionnement du compresseur (100) sur la base de la haute pression détectée ou de la basse pression détectée du cycle de réfrigération ;
déterminer (S13; S33), par une unité de détection de charge (180), une charge de courant d'un espace intérieur (5), un niveau de charge de l'espace intérieur (5) étant déterminé en comparant (S14, S15 ; S34, S35, S38) la charge de courant à une charge de référence ; et
déterminer (S17, S19 ; S37, S40, S42), par l'unité de détection de charge (180), la fréquence de fonctionnement du compresseur (100) sur la base du niveau de charge déterminé,
dans lequel l'unité de détection de charge (180) comporte :
un détecteur de fréquence pour détecter la fréquence de fonctionnement du compresseur (100), et
un détecteur d'énergie pour détecter une consommation de courant et une consommation d'énergie ayant lieu lors de l'activation du cycle de réfrigération,
dans lequel le niveau de charge comporte :
une charge élevée dans laquelle la charge de courant est supérieure ou égale à la charge de référence ; et
une charge faible dans laquelle la charge de courant est inférieure ou égale à la charge de référence,
dans lequel la charge de référence est une charge correspondant à lorsqu'une vitesse d'augmentation de la fréquence de fonctionnement du compresseur (100) est une première vitesse d'augmentation réglée, ou une charge correspondant à lorsqu'une vitesse d'augmentation de la consommation d'énergie ou de la consommation de courant est une seconde vitesse d'augmentation réglée, et
dans lequel, lorsqu'il est déterminé que la vitesse d'augmentation de la fréquence de fonctionnement du compresseur (100) est supérieure à la première vitesse d'augmentation réglée ou lorsque la vitesse d'augmentation de la consommation d'énergie ou de la consommation de courant est supérieure à la seconde vitesse d'augmentation réglée, la charge de courant est déterminée comme étant la charge élevée.

2. Procédé selon la revendication 1, dans lequel la haute pression et la basse pression du cycle de réfrigération sont détectées lorsque le cycle de réfrigération est activé.

3. Procédé selon la revendication 1, dans lequel, lorsque la charge de courant est déterminée comme étant la charge élevée, la fréquence de fonctionnement du compresseur (100) est réglée à une première fréquence de fonctionnement sur la base des informations mises en correspondance avec la fréquence de fonctionnement du compresseur (100).

4. Procédé selon la revendication 3, dans lequel la première fréquence de fonctionnement inclut la fréquence de fonctionnement maximale du compresseur (100).

5. Procédé selon l'une quelconque des revendications 1 à 4, comportant en outre la détermination, par la commande (200), d'un degré d'ouverture d'un dispositif d'expansion principal (130) sur la base du niveau de charge déterminé,
dans lequel, lorsque la charge de courant est déterminée comme étant la charge élevée, le degré d'ouverture du dispositif d'expansion principal (130) est réglé à un degré d'ouverture complète.

6. Procédé selon l'une quelconque des revendications 1 à 5, comportant en outre la détermination d'un nombre de rotations d'un ventilateur extérieur (125) sur la base du niveau de charge déterminé,
dans lequel, lorsque la charge de courant est déterminée comme étant la charge élevée, le nombre de rotations du ventilateur extérieur (125) est réglé au nombre maximal de rotations.

7. Procédé selon l'une quelconque des revendications 1 à 6, comportant en outre l'exécution d'une opération de maintien de température, par la commande (200), pour maintenir la température de l'espace intérieur (5) lorsque la température de l'espace intérieur (5) atteint une température réglée.

8. Procédé selon la revendication 7, dans lequel, lorsque l'opération de maintien de température est exécutée, le compresseur (100) est entraîné à une fréquence de fonctionnement qui est inférieure à la fréquence de fonctionnement déterminée du compresseur (100).

9. Climatiseur (10) comportant :
un compresseur (100) avec une fréquence de fonctionnement réglable ;
un échangeur de chaleur extérieur (120) qui condense du fluide frigorigène comprimé par le compresseur (100) dans une opération de refroidissement d'air ;
un dispositif d'expansion principal (130) qui décomprime le fluide frigorigène condensé par l'échangeur de chaleur extérieur (120) ;
un capteur de pression (175, 170) pour détecter une haute pression et une basse pression du cycle de réfrigération ;
un échangeur de chaleur intérieur (140) qui évapore le fluide frigorigène décomprimé par le dispositif d'expansion principal (130) et évacue l'air dans un espace intérieur (5) ;
une unité de détection de charge (180) qui détecte une charge de l'espace intérieur (5), l'unité de détection de charge (180) comportant une unité de détection de fréquence qui détecte une vitesse de variation de la fréquence de fonctionnement du compresseur (100) et une unité de détection d'énergie qui détecte une consommation de courant et une consommation d'énergie ayant lieu lors d'un fonctionnement du climatiseur (10) ;
une unité de mémoire (210) qui stocke des informations concernant la fréquence de fonctionnement du compresseur (100), les informations stockées étant mises en correspondance avec la charge détectée par l'unité de détection de charge (180) ; et
une commande (200) configurée pour régler une fréquence de fonctionnement du compresseur (100) sur la base de la haute pression détectée ou de la basse pression détectée du cycle de réfrigération,
dans lequel l'unité de détection de charge (180) est configurée pour déterminer une charge de courant de l'espace intérieur (5), un niveau de charge de l'espace intérieur (5) étant déterminé en comparant (S14, S15 ; S34, S35, S38) la charge de courant avec une charge de référence,
dans lequel l'unité de détection de charge (180) est configurée pour déterminer la fréquence de fonctionnement du compresseur (100) sur la base du niveau de charge déterminé,
dans lequel le niveau de charge comporte :
une charge élevée dans laquelle la charge de courant est supérieure ou égale à la charge de référence ; et
une charge faible dans laquelle la charge de courant est inférieure ou égale à la charge de référence,
dans lequel la charge de référence est une charge correspondant à lorsqu'une vitesse d'augmentation de la fréquence de fonctionnement du compresseur (100) est une première vitesse d'augmentation réglée, ou une charge correspondant à lorsqu'une vitesse d'augmentation de la consommation d'énergie ou de la consommation de courant est une seconde vitesse d'augmentation réglée, et
dans lequel, lorsqu'il est déterminé que la vitesse d'augmentation de la fréquence de fonctionnement du compresseur (100) est supérieure à la première vitesse d'augmentation réglée ou lorsque la vitesse d'augmentation de la consommation d'énergie ou de la consommation de courant est supérieure à la seconde vitesse d'augmentation réglée, la charge de courant est déterminée comme étant la charge élevée.
